Europäisches Patentamt

European Patent Office

Office européen des brevets

(11) Publication number: **0 065 297**
A2

## (12) EUROPEAN PATENT APPLICATION

(21) Application number: 82104248.8

(22) Date of filing: 14.05.82

(51) Int. Cl.³: **F 02 B 27/00**

(30) Priority: 14.05.81 JP 73250/81

(43) Date of publication of application: 24.11.82
Bulletin 82/47

(84) Designated Contracting States: DE FR GB

(71) Applicant: Yamaha Motor Co., Ltd., 2500 Shingai, Iwata-shi Shizuoka-ken (JP)

(72) Inventor: Yamamoto, Nasahiro, 266-15 Shimohongo Toyoda-cho, Iwata-gun Shizuoka-ken (JP)
Inventor: Mizoguchi, Masayasu, 2426-31 Mitsuke Iwata-shi, Shizuoka-ken (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 43, D-8000 München 22 (DE)

(54) Intake system for two-cycle internal combustion engines.

(57) A two-cycle internal combustion engine having an intake plenum chamber (12) which is arranged in the lower portion of the engine cylinder (3). An elastic diaphragm (14) forming one side of said intake plenum chamber is sandwiched between the engines crankcase (1) and said cylinder (3) such that the other side of said diaphragm is facing the crankcase interior.

INTAKE SYSTEM FOR TWO-CYCLE INTERNAL COMBUSTION
ENGINES

The present invention relates to an improvement in a crankroom recompression type 2-cycle internal combustion engine. The engine of this type uses the expansion and contraction of the capacity of a crankroom in accordance with the ascent and descent of a piston as means for feeding its cylinder with an air-fuel mixture so that it can enjoy an advantage that it does not require a supercharger. On the contrary, since a lubricant cannot be reserved in the crankroom, the air-fuel mixture is mixed with a small quantity of lubricant to lubricate sliding portions so as to lubricate a crankshaft and a cylinder wall. As a result, the consumption of the lubricant is rather high and the smoke generated by burning the lubricant may be discharged together with an engine exhaust gas. In order to eliminate those disadvantages, therefore, there has been used a complicated additional device such as a separate lubricating device.

As a method of eliminating those disadvantages, according to the prior art, there has been proposed an engine (e.g. Japanese Utility Model Laid-Open No. 55 - 12022, or U.S.P. No. 2,745,390 or 3,195,526), in which an intake plenum chamber made receptive of the action of the pressure in the crankroom to expand and contract is disposed in an intake passage leading to a scavenging port so that the air-fuel mixture may be pumped into the cylinder by the action of that intake plenum chamber while being prevented from being introduced into the crankroom.

However, the preceding technique thus far described cannot easily retain a large capacity necessary for the intake plenum chamber and has an intrinsic difficulty that the engine itself has its size enlarged if the size of the plenum chamber is enlarged.

The invention as claimed is intended to provide a remedy. The advantages offered by the invention are mainly that the pressure in the intake plenum chamber is boosted in order to permit the air-fuel mixture to flow into the combusion chamber of the two-cycle internal combustion engine, simultaneously as the scavenging ports are opened in response to the piston performance of said internal combustion engine. Hence, the air-fuel mixture is fed from said intake plenum chamber into the cylinder while by-passing the crankcase. The present invention offers a system which can easily retain a large capacity as required for the intake plenum chamber and avoids the intrinsic problem that the engine itself must have its size enlarged in order to enlarge the size of the plenum chamber.

One way of carrying out the invention is described in detail below, with reference to drawings which illustrate two preferred embodiments, in which:

Fig. 1 is a sectional view showing a two-cycle internal combustion engine incorporating the invention;

Fig. 2 is a section taken along line II-II, of Fig. 1; and

Fig. 3 is a sectional view similar to Fig. 2 but showing a second preferred embodiment.

In the drawings, reference numeral 1 indicates a crankcase having an upper open portion, on which there are disposed a cylinder 3, a piston 4 and a cylinder head 4a, all defining together a combustion chamber 2.

The piston 4 is connected through a connecting rod 5 to a crankshaft 6 which is borne in the crankcase 1. The cylinder 3 has its cylindrical wall 3a arranged in a well known manner with both a scavenging port, which is composed of two symmetrical main scavenging ports 7a and 7a and one auxiliary scavenging port 7b, and an exhaust port 8. Numeral 3b indicates a plurality of radiating fins which are formed on the outer side of the cylindrical wall 3a. Numeral 9 indicates an intake passage which leads the scavenging ports 7a and 7b to the atmosphere and numeral 10 indicates an exhaust passage.

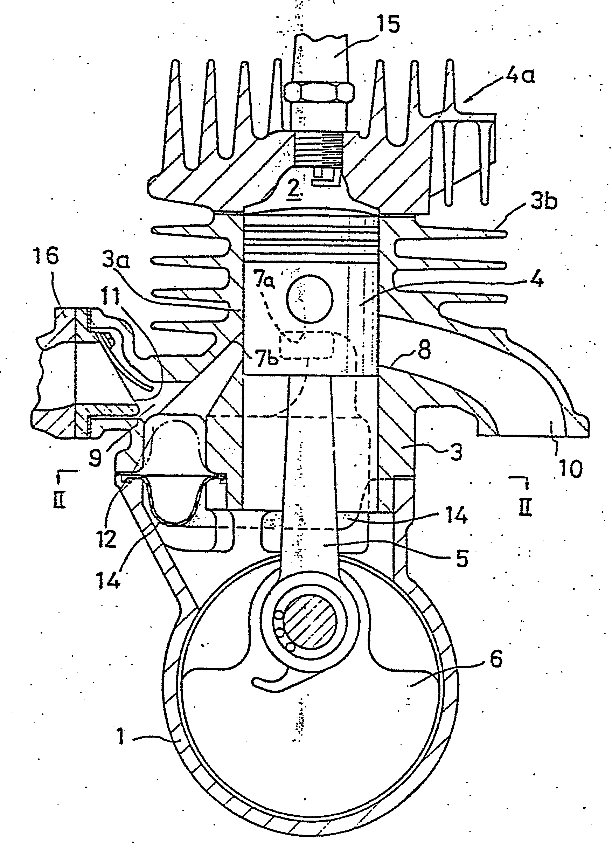

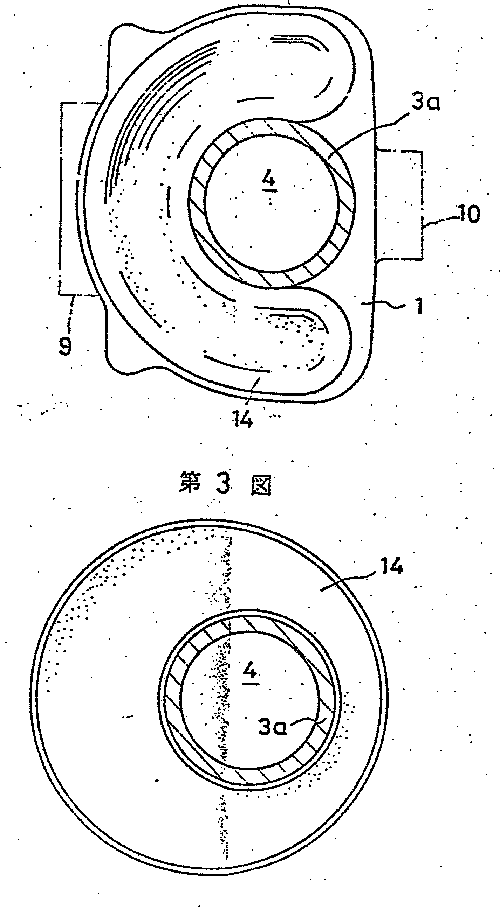

The intake passage 9 is equipped with both a check valve 11, which allows only an air flow toward the scavening port and an intake plenum chamber 12 which is disposed downstream of that check valve 11. The intake plenum chamber 12 is formed generally into such a shape of the letter "U" so as to form a part of the intake passage 9, which is formed along the outer side of the cylindrical wall 3a in the lower portion of the cylinder 3, and an elastic diaphragm 14 forming the lower wall of the intake plenum chamber 12 is made of a rubber-like synthetic resin and is sandwiched between the jointed sides of the case 1 and the cylinder 3. The elastic diaphragm 14 has its other side facing the inside of the crankcase 1 such that it is constructed to alternately bulge into the inside of the crankcase 1 and into the inside of the intake plenum chamber 12 in accordance with the rise and drop of the pressure in the crankcase 1. Incidentally, the general U-shapes of the intake plenum chamber 12 and the diaphragm 14 are not indispensable for the construction of the present invention but may be so circular as is shown in Fig. 3. Numeral 15 indicates an ignition plug which is mounted in the cylinder head 4a, and numeral 16 indicates the exit of the carburetor.

The operations of the embodiment thus constructed will be described in the following. First of all, when the piston 4 ascends, the pressure in the crankcase 1 is dropped so that the diaphragm 14 so bulges into the crankcase 1 as is shown by a solid line in Fig. 1. Since, at this time, the scavenging ports 7a and 7b are closed by the piston 4, the pressure in the intake plenum chamber 12 is dropped to open the check valve 11 so that the air-fuel mixture prepared by the carburetor 16 flows thereinto. Next, when the piston 4 is shifted to its descending stroke, the pressure in the crankcase 1 is boosted so that the diaphragm 14 so bulges into the intake plenum chamber 12 as is shown by a double-dotted line thereby to reduce the capacity of that chamber 12. As a result, the pressure in the intake plenum chamber 12 is boosted to close the check valve 11, and the mixture therein flows into the combustion chamber formed above the upper surface of the piston 4 simultaneously as the scavenging ports 7a and 7b are opened. The operations of the diaphragm 14 thus far described are effected in association with the piston 4 so that the mixture prepared by the carburetor 16 is fed to the inside of the cylinder 3 while by-passing the crankcase 1. The subsequent operations are not specifically different from those of the usual crankroom precompression type two-cycle engine.

As has been described hereinbefore, according to the present invention, in the two-cycle engine in which there are disposed in the intake passage both the check valve for allowing only the air flow toward the scavenging port and the intake plenum chamber arranged downstream of that check valve and adapted to expand and contract in response to the pressure change in the crankcase, that intake plenum chamber is positioned in the lower portion of the cylinder so that the cylinder has its lower portion cooled down by the mixture passing therethrough. As a result, that portion does not require the cooling fins and the cooling water jacket so that the external size of the engine can have its enlargement minimized to provide the intake plenum chamber having a large capacity. Moreover, the diaphragm forming the side wall of the intake plenum chamber is sandwiched between the jointed sides of the cylinder and the crankcase, and its other side facing the inside of the crankcase. As a result, there can be attained an effect that the parts such as the cover for forming the intake plenum chamber can be minimized.

Incidentally, if the diaphragm 14 is disposed at the lower side of the intake passage 9 formed in the outer circumference of the cylindrical wall 3a of the cylinder 3, as in the embodiment, to form a part of the intake plenum chamber 12, the reduction in the overall size can be superior to that in case that the intake passage 9 and the intake plenum chamber 12 are separately formed in the cylinder 3. Moreoever, if the intake passage 9 forming a part of the intake plenum chamber is formed in the jointed sides of the crankcase 1 and the cylinder 3, most of the intake passage can be cast without any use of a core so that its production can be facilitated.

CLAIMS

1. A two-cycle internal combustion engine of the type in which a cylinder (3) is mounted on the open portion of a crankcase (1), in which a scavenging port (7a, 7b) and an exhaust port (8) as formed in said cylinder are controlled to be opened and closed by a piston (4) and in which there is disposed in an intake passage (9) for venting said scavenging port to the atmosphere an intake plenum chamber (12) adapted to expand and contract in response to the pressure change in said crankcase, characterized in that an intake plenum chamber (12) is arranged in the lower portion of said cylinder (3); and in that an elastic diaphragm (14) forming one side of said intake plenum chamber is sandwiched between said crankcase (1) and said cylinder such that, the other side of said diaphragm is facing the crankcase interior.

2. Engine according to claim 1, characterized in that in said intake passage (9), upstream of said intake plenum chamber (12), there is disposed a check valve (11) for allowing only a gas flow toward said scavenging port (7a; 7b).

3. Engine according to one of claims 1 and 2, characterized in that said intake plenum chamber (12) is positioned in the lower portion of the cylinder (3) such that the cylinder has its lower portion cooled down by the intake gas flowing from said plenum chamber into said cylinder.

4. Engine according to one of claims 1 to 3, characterized in that said intake passage (9) is formed along the outer circumference of a cylindrical wall (3a) of said cylinder (3) perform a part of said intake plenum chamber.

5. Engine according to one of claims 1 to 4, characterized in that said intake passage (9) is formed in the jointed sides of said crankcase (1) and said cylinder (3).

6. Engine according to one of claims 1 to 5, characterized in that said intake plenum chamber (12) is generally U-shaped.

2/2    0065297

第 3 図